# EUROPÄISCHE PATENTSCHRIFT

(11) **EP 1 477 695 B1**
(45) Veröffentlichungstag und Bekanntmachung des Hinweises auf die Patenterteilung: **31.12.2014**
(21) Anmeldenummer: 04010941.5
(22) Anmeldetag: 07.05.2004
(51) Int. Cl.: F16C 32/04, H01F 13/00

(54) **Radiales Magnetlager, Verfahren zur Bearbeitung eines Ringmagneten sowie deren Verwendung**
Magnetic bearing, method of machining a ringmagnet and use thereof
Palier magnétique radial, procédé d'usinage d'un aimant torique et son utilisation

(30) Priorität: 15.05.2003 DE 10321925
(43) Veröffentlichungstag der Anmeldung: 17.11.2004
(73) Patentinhaber: Vacuumschmelze GmbH & Co. KG, 63450 Hanau (DE)
(72) Erfinder: Katter, Matthias, Dr., 63755 Alzenau (DE)
(74) Vertreter: Schmuckermaier, Bernhard

(56) Entgegenhaltungen:
- EP-A- 0 470 637
- DE-A1- 19 607 841
- US-A- 5 506 558
- US-A- 5 640 887

## Beschreibung

Die Erfindung liegt auf dem Gebiet der Magnetlager, die zur radialen aber auch axialen Lagerung von schnelldrehenden Rotationsmaschinen mit sehr geringer Reibung und extrem hoher Lebensdauer eingesetzt werden. Zu diesem Zweck werden Lager auf der Stator- und Rotorseite aus jeweils einem oder mehreren Ringmagneten aufgebaut wobei die Ringmagnete permanentmagnetisiert sind und die entsprechenden Magnetkräfte zwischen den Ringmagneten den Rotor jeweils in seiner Sollposition halten.

Im wesentlichen werden zum Aufbau derartiger radialer Magnetlager Ringmagnete eingesetzt, deren Magnetisierungsrichtung zu ihrer Zylindersymmetrieachse im wesentlichen parallel ist. Dabei ist bei idealen Gegebenheiten, das heißt wenn die Magnetisierungsachse genau mit der Symmetrieachse des Ringmagneten übereinstimmt und auch die Homogenität des magnetischen Materials absolut gegeben ist, ein Idealverhalten des Radiallagers zu erwarten. Es stellt sich jedoch heraus, dass einerseits ein Winkelfehler (Abweichung der magnetischen Vorzugsrichtung von der Zylindersymmetrieachse) und andererseits eine Inhomogenität des magnetischen Materials typischerweise auftreten. Sowohl Winkelfehler als auch die Inhomogenitäten lassen sich bei einem Aufbau eines Magnetlagers aus mehreren Ringmagneten durch entsprechende Verdrehung der Ringmagneten gegeneinander in gewissem Grad ausgleichen.

Die vorliegende Erfindung bezieht sich auf ein radiales Magnetlager mit einem Statorteil und einem Rotorteil mit jeweils wenigstens einem permanentmagnetischen Ringmagneten im Statorteil und im Rotorteil, wobei die Ringmagnete koaxial zueinander angeordnet sind und jeder der Ringmagnete im wesentlichen in Richtung seiner Zylindersymmetrieachse magnetisiert ist.

Ein derartiges radiales Magnetlager ist beispielsweise aus der Europäischen Patentanmeldung EP 470637 bekannt. Dort ist es als Radiallager für eine Turbomolekularpumpe eingesetzt. Turbomolekularpumpen weisen typischerweise extrem hohe Drehzahlen im Betrieb auf, so dass dort sehr reibungsarme Lager mit guten mechanischen Eigenschaften extrem wichtig sind. Auβerdem können,wegen des Betriebs im Hoch- und Ultrahochvakuumbereich keine Schmiermittel eingesetzt werden.

Bei dem dort beschriebenen System sind zwei radiale Magnetlager vorgesehen, wobei jedes der Lager jeweils vier Magnete auf der Statorseite und vier zu diesen koaxial angeordnete Ringmagnete auf der Rotorseite aufweist.

Aus der DE OS 19607841 A1 ist eine Anordnung zur Vermessung und Kennzeichnung von Ringmagneten bekannt, mit der sowohl die Inhomogenität als auch der Winkelfehler bei der Magnetisierung eines Ringmagneten erfassbar ist. Hierzu wird ein Ringmagnet mittels eines Schrittmotors angetrieben und mittels zweier Hallsensoren wird laufend die Magnetfeldstärke aufgenommen.

Da bei den gängigen Qualitäten von Ringmagneten die vorhandene Inhomogenität und der Winkelfehler durchaus zu unerwünschten Drehmomenten (Winkelfehler) und direkten radialen Kraftwirkungen (Inhomogeniäten) führen, soll durch eine Vermessung und Kennzeichnung dieser Größen an den Ringmagneten eine Aussortierung der Teile ermöglicht werden, die eine zu große Abweichung von der Idealform aufweisen. Die Kennzeichnungen der Ringmagnete sollen auch dafür genützt werden können, dass Teile so zu einem Magnetsystem zusammengesetzt werden können, dass sich die Winkelfehler beziehungsweise die Inhomogenitäten weitgehend gegenseitig aufheben.

Der Einfluss von Ungleichmäßigkeiten bei der Magnetisierung eines permanentmagnetischen Ringmagneten als Bestandteil eines radialen Magnetlagers auf die magnetischen Eigenschaften dieses Lagers sind beispielsweise auch in der Veröffentlichung IEEE Transactions on Magnetics, Volume 36, No. 5, September 2000 beschrieben.

Aus der Britischen Patentanmeldung GB 2335242 ist eine Lageranordung mit magnetischen Ringen bekannt, wobei jeweils ein Ringmagnet auf der Stator- und der Rotorseite einander koaxial, in Axialrichtung beabstandet, gegenüberstehen.

Es ist somit aus dem Stand der Technik bekannt, Magnetlager aus mehreren Ringmagneten zusammenzusetzen und bei der Zusammensetzung auch Winkelfehler und Inhomogenitäten zu berücksichtigen beziehungsweise durch entsprechende Anordnung einzelner Ringmagnete eine Kompensation von Winkelfehlern und Inhomogenitäten möglichst weitgehend zu erreichen.

Außerdem ist bekannt, dass solche passive radiale Magnetlager in axialer Richtung prinzipiell instabil sind. In axialer Richtung auftretende Kräfte müssen entweder durch ein aufwendiges aktives axiales Magnetlager oder durch ein mechanisches Hilfslager aufgefangen werden.

Der vorliegenden Erfindung liegt die Aufgabe zugrunde, die Qualität von passiven radialen Magnetlagern im Hinblick auf die Reduzierung von unerwünschten Axialkräften weiter zu verbessern. Diese Aufgabe wird durch ein Verfahren zur Bearbeitung eines Ringmagneten gemäß Anspruch 1, durch Verfahren zur Herstellung radialer Magnetlager gemäß den Ansprüchen 4 und 5 sowie durch ein radiales Magnetlager gemäß Anspruch 6 gelöst. Ausgestaltungen und Weiterbildungen der Erfindung sind Gegenstand von Unteransprüchen.

Es hat sich gezeigt, dass Ringmagnete neben Homogenitäts- und Winkelfehlern auch einen sogenannten Nord/Südeffekt aufweisen, der im folgenden durch einen Nord/Süd-Asymmetrievektor beschrieben wird. Bei dem Effekt handelt es sich um eine kegelförmige, radialsymmetrische Abweichung der Magnetisierungsrichtung entlang des Umfangs des Ringmagneten von der magnetischen Vorzugsrichtung parallel zur Zylindersymmetrieachse des Ringmagneten. Dieser Fehler kommt insbesondere bei unter großtechnischen Bedingungen hergestellten Magnetringen vor. Das Vorhandensein einer Nord/Süd-Asymmetrie, die sich in einer unterschiedlichen Feldstärke auf der Nord- und der Südseite des Ringmagneten äußert, führt zu dem Entstehen von parasitären axialen Kräften in dem radialen Magnetlager.

Ziel der Erfindung ist es, die Orientierung und gegebenenfalls auch die Stärke des Nord/Süd-Asymmetrievektors für jeden einzelnen Ringmagneten zu messen und zu kennzeichnen, und die Ringe derart zu radialen Magnetlagern zusammenzubauen, dass die Beiträge der einzelnen Ringe zur Axialkraft möglichst weit kompensiert werden. Der Betrag des Nord/Süd-Asymmetrievektors ist dabei durch die Formel (N - S)/(N + S) gegeben, wobei N eine auf der Nordseite des Ringmagneten gemessene Feldstärke und S eine in einer bezüglich der auf der Zylindersymmetrieachse senkrecht stehenden Symmetrieebene symmetrischen Position gemessene Feldstärke ist. Die Richtung des Nord/Süd-Asymmetrie-vektors kann so definiert werden, daß der Vektor zu der Seite des Ringmagneten gerichtet ist, zu der die Feldlinien konisch zusammenlaufen. Bei der Festlegung des Schwellwertes kann man sich auch daran orientieren, wieweit in einer Rotationsmaschine der Rotorteil axial gegenüber dem Statorteil verschoben werden kann, um die Axialkräfte durch Justage auszugleichen.

Dabei reicht es normalerweise aus, wenn ein gewisser Gesamtwert der Nord/Süd-Asymmetrie im Lager nicht überschritten wird, so dass ein üblicherweise in einer drehenden Maschine zusätzlich zu dem radialen Magnetlager vorhandenes axiales Lager nicht überbeansprucht wird. Für ein herzustellendes radiales Magnetlager ist somit ein Schwellwert bekannt, den das vorgesehene axiale Lager noch zulässt.

Die Größe des Nord/Süd-Asymmetrievektors hängt außer von den übrigen Eigenschaften des Ringmagneten insbesondere von der Neigung der lokal am Umfang des Ringmagneten gemessenen Magnetfeldstärke gegenüber der magnetischen Vorzugsrichtung ab.

Gemäß einem ersten Aspekt der Erfindung wird bei einem Verfahren zur Bearbeitung eines Ringmagneten mit Axialmagnetisierung der Nord/Süd-Asymmetrievektor des Ringmagneten gemessen und wenigstens der Richtungssinn (=Orientierung) des Nord/Süd-Asymmetrievektors sowie optional auch dessen Betrag auf dem Ringmagneten markiert.

Die Markierung erlaubt beim Zusammensetzen eines Magnetlagers eine Anordnung einzelner permanentmagnetischer Ringmagnete zueinander derart, dass die Nord/Süd-Asymmetrievektoren einander kompensieren beziehungsweise dass die Summe der Nord/Süd-Asymmetrievektoren minimiert wird.

Es kann dabei vorteilhaft vorgesehen sein, dass der Nord/Süd-Asymmetrievektor durch Messung der Magnetfeldstärke auf der Nordseite und auf der Südseite der zu der Zylinderachse des Ringmagneten senkrecht stehenden Symmetrieebene und Vergleich der Messwerte sowie deren in Beziehung setzen zueinander durch Summen- oder Differenzbildung bestimmt wird.

Das beschriebene Verfahren stellt eine zuverlässige Methode zur Ermittlung des Richtungssinns und des Betrages des Nord/Süd-Asymmetrievektors dar. Die Messung kann beispielsweise mit mehreren Hallsensoren vorgenommen werden, die beiderseits der auf der Zylindersymmetrieachse senkrecht stehenden Symmetrieebene eines Ringmagneten angeordnet werden, wobei der Ringmagnet bewegt, insbesondere um die Zylinderachse gedreht wird und derweil die durch die Hallsensoren aufgenommenen Messwerte registriert werden. Aus dem Vergleich der auf der Nord- und der Südseite des Ringmagneten erfassten Messwerte ergibt sich der Nord/Süd-Asymmetrievektor.

Gemäß einem zweiten Aspekt der Erfindung wird ein radiales Magnetlager mit einem Statorteil und einem Rotorteil mit jeweils wenigstens einem permanentmagnetischen Ringmagneten hergestellt. Die Ringmagnete, die jeweils im wesentlichen in Richtung ihrer Zylindersymmetrieachse magnetisiert sind, werden derart koaxial zueinander angeordnet, dass die Summe ihrer Nord/Süd-Asymmetrievektoren kleiner ist als ein vorgegebener Schwellwert.

Eine vorteilhafte Ausgestaltung der Erfindung betrifft ein Verfahren zur Herstellung eines radialen Magnetlagers. Hierbei werden Ringmagnete, die gemäß dem Verfahren nach dem ersten Aspekt bearbeitetet und damit markiert wurden, derart koaxial zueinander angeordnet, dass die Summe der Nord/Süd-Asymmetrievektoren aller Ringmagnete minimiert ist.

Da in diesem Fall die Axialkräfte auf ein Axiallager minimiert sind, resultiert diese Anordnung in einer optimierten Lebensdauer und minimierten Beanspruchung des Axiallagers. Außerdem lässt sich der Arbeitspunkt des Axiallagers (das heißt der Punkt, an dem der Rotor aufgrund der axialen Kraftwirkung des Axiallagers anschlägt) am zuverlässigsten bestimmen und muss daher im Normalfall nicht oder nur wenig nachjustiert werden.

Ein dritter Aspekt der Erfindung betrifft ein radiales Magnetlager und sieht vor, dass der Statorteil zwei oder mehr Ringmagnete aufweist, deren Asymmetrievektoren untereinander denselben ersten Richtungssinn aufweisen und dass der Rotorteil aus ebenso vielen Ringmagneten wie der Statorteil besteht, deren Asymmetrievektoren untereinander denselben jeweils dem ersten Richtungssinn entgegengesetzten zweiten Richtungssinn aufweisen.

Auf diese Weise können Statorteile und Rotorteile vorgefertigt werden und es muss lediglich beim Zusammenbau des Magnetlagers vor Ort darauf geachtet werden, dass die Nord/Süd-Asymmetrievektoren des Statorteils und die Asymmetrievektoren des Rotorteils unterschiedlichen Richtungssinn aufweisen. In diesem Fall kann davon ausgegangen werden, dass die Summe der Asymmetrievektoren des Rotorteils einerseits und die Summe der Asymmetrievektoren des Startorteils andererseits einander größtenteils kompensieren. Der Richtungssinn der jeweiligen Asymmetrievektoren kann zu diesem Zweck auf dem Ringmagneten oder auch auf dem Statorteil und dem Rotorteil als ganzem markiert werden.

Die Erfindung kann außerdem vorteilhaft dadurch ausgestaltet sein, dass der Statorteil und/ oder der Rotorteil zwei oder mehr Ringmagneten aufweist, die zueinander so angeordnet sind, dass innerhalb des Statorteils und/oder des Rotorteils die Summe der Asymmetrievektoren der Ringmagnete minimiert ist.

In diesem Fall ist beim Zusammenbau von Statorteil und Rotorteil möglicherweise keine weitere Abstimmung mehr notwendig, soweit die Asymmetrievektoren im Statorteil einander schon gegenseitig kompensieren beziehungsweise dieselbe Kompensation im Rotorteil für sich allein stattfindet. Bleibt im Statorteil und im Rotorteil jeweils für sich ein resultierender Nord/Süd-Asymmetrievektor übrig, so können Statorteil und Rotorteil noch derart gegeneinander angeordnet werden, dass sich ihre resultierenden Asymmetrievektoren möglichst weitgehend aufheben.

Eine weitere vorteilhafte Ausgestaltung der Erfindung sieht vor, dass der Statorteil zwei oder mehr Ringmagnete aufweist, deren Asymmetrievektoren alle jeweils zum Nordpol des jeweiligen Ringmagneten zeigen und dass der Rotorteil ebensoviele Ringmagnete aufweist, deren Asymmetrievektoren alle zum Südpol des jeweiligen Ringmagneten zeigen oder umgekehrt.

Dadurch wird beim Zusammenbau von Statorteil und Rotorteil eine weitgehende Kompensation der Nord/Süd-Asymmetrievektoren erreicht, wobei zusätzlich gewährleistet ist, dass bei jeweils einander zugeordneten Ringmagneten des Stator- und Rotorteils, die gleiche Nord-Süd-Ausrichtung aufweisen, die Nord/Süd-Asymmetrievektoren entgegengesetzt gerichtet sind, so dass parasitäre Kraftwirkungen sich innerhalb eines Paares von Ringmagneten kompensieren.

Diese Ausführungsform hat den Vorteil, dass jeweils die Radialkomponenten des magnetischen Feldes von zwei einander zugeordneten Ringmagneten im Stator- und Rotorteil entgegengesetzt gerichtet sind, was sich günstig auf die radiale Steifigkeit auswirkt.

Die erfindungsgemäßen hergestellten radialen Lager können vorteilhaft und zur Schonung von axialen Lagern in Rotationsmaschinen eingesetzt werden können.

Die Erfindung wird nachfolgend anhand eines in den Figuren der Zeichnung gezeigten Ausführungsbeispieles näher erläutert. Es zeigt:
- Figuren 1a bis 1d: verschiedene Abweichungen der Magnetisierung eines Ringmagneten von der Idealform,
- Figur 2: genauer die Nord/Süd-Asymmetrie eines Ringmagneten,
- Figuren 3 und 4: ein radiales Magnetlager mit sechs Ringmagneten, wobei die Asymmetrievektoren innerhalb des Statorteils und innerhalb des Rotorteils jeweils einheitlich parallel oder antiparallel zur Magnetisierungsrichtung der Ringmagnete ausgerichtet sind,
- Figur 5: ein radiales Magnetlager, bei dem Ringmagnete mit wechselnder Orientierung der Nord/Süd-Asymmetrie gemischt sind, und
- Figur 6: eine Messung der unerwünschten Axialkraft, die durch das radiale Magnetlager erzeugt wird, in Abhängigkeit von der geschätzten Summe der Nord/Süd-Asymmetrien der in dem Magnetlager enthaltenen Ringmagnete.

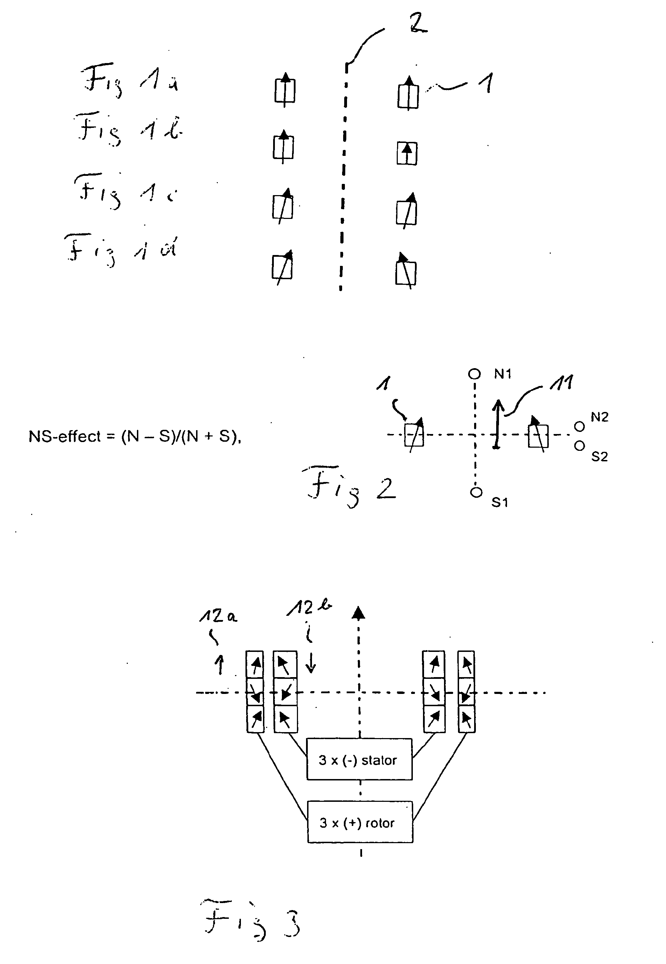

In den Figuren 1a - 1d ist schematisch in einem Querschnitt ein Ringmagnet 1 dargestellt mit einer Zylindersymmetrieachse 2, wobei die eingezeichneten Pfeile die lokale Magnetisierung repräsentieren sollen. In der Figur 1a soll lediglich gezeigt werden, dass ein idealer Ringmagnet einfach, wenn er in Axialrichtung, das heißt in Richtung seiner Zylindersymmetrieachse 2 magnetisiert ist, durch eine einheitliche, homogene Magnetisierung vollständig beschrieben werden kann.

In der Figur 1b ist der Effekt der Inhomogenität gezeigt, nämlich dass entlang des Umfangs des Ringmagneten unterschiedliche Magnetisierungsstärken auftreten können. Dies kann durch Unregelmäßigkeiten beim Herstellungsprozeß geschehen.

Aus der Figur 1c geht der bei vielen Ringmagneten vorhandene Winkelfehler hervor, der darin besteht, dass der Vektor der Gesamtmagnetisierung gegenüber der Zylindersymmetrieachse 2 geneigt ist. Dies erzeugt bei Verwendung des Ringmagneten in einem magnetischen Radiallager ungewollte Drehmomente.

In der Figur 1d ist der Effekt der Nord/Süd-Asymmetrie dargestellt, der dadurch entsteht, dass entlang des Umfangs des Ringmagneten die lokale Magnetisierungsrichtung derart gegenüber der Zylindersymmetrieachse 2 geneigt ist, dass insgesamt eine kegelförmige Ausrichtung der Magnetisierungsvektoren entsteht. Es entsteht dabei ein sogenannter heißer Pol, das ist die Seite des Ringmagneten, an der die Magnetfeldlinien sich verdichten und ein kalter Pol, die Seite des Ringmagneten, an der sich die Magnetfeldlinien voneinander entfernen.

Dies ist deutlicher noch in der Figur 2 dargestellt, bei der der heiße Pol mit dem Nordpol identisch ist und der kalte Pol mit dem Südpol. In diesem Fall spricht man von einer positiven Polarität der Nord/Süd-Asymmetrie, während man im Fall eines heißen Südpols von einer negativen Polarität der Nord/Süd-Asymmetrie spricht. Der Nord/Süd-Asymmetrievektor ist mit 11 bezeichnet.

In der Figur 2 ist auch dargestellt, dass jeweils zwei symmetrisch angeordnete Messpunkte, z.B. N1 und S1 sowie N2 und S2, vorgesehen sind, an denen die Magnetfeldstärke mittels beispielsweise zweier Hallsonden gemessen werden kann, um die Nord/Süd-Asymmetrie zu bestimmen. Die Asymmetrie der Feldstärke macht für großtechnisch hergestellte Ringmagnete je nach Herstellungsverfahren einen Unterschied zwischen 5 und 15% der Feldstärke am heißen und am kalten Pol aus.

Zusammenfassend lässt sich somit sagen, dass der Nord/Süd-Asymmetrieeffekt durch die radialsymmetrische Neigung der Magnetisierung des Ringmagneten gegenüber der Zylindersymmetrieachse gebildet ist.

Größenmäßig kann die Nord/Süd-Asymmetrie durch den Quotienten aus der Differenz der Feldstärke auf der Nordseite und der Feldstärke auf der Südseite einerseits und der Summe dieser beiden Feldstärken andererseits beschrieben werden: NS-Asymmetrie = (N - S) / (N + S).

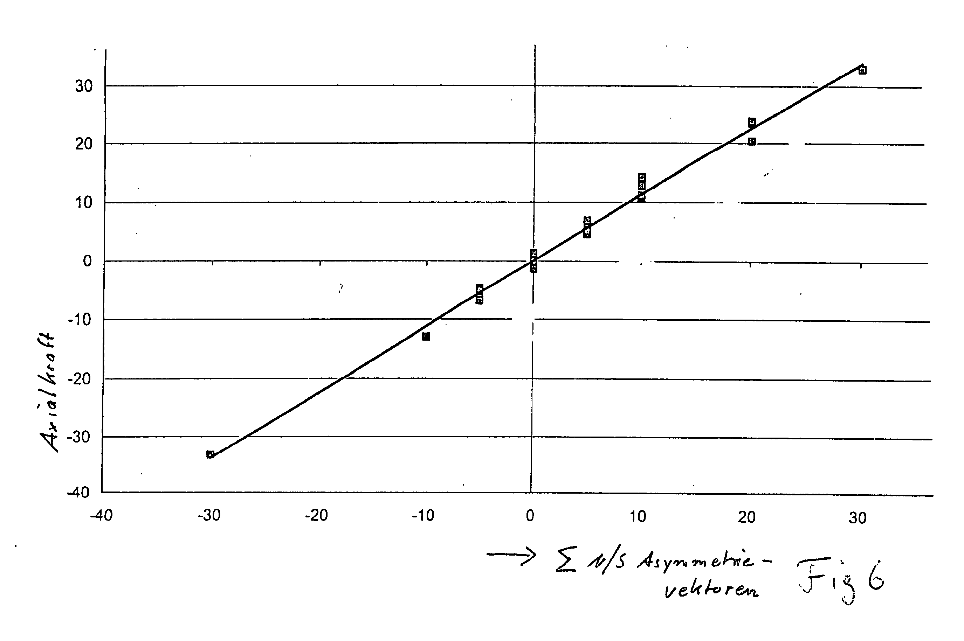

N und S sind dabei Streufeldstärken, die an symmetrischen Positionen bezüglich der auf der Zylindersymmetrieachse 2 senkrecht stehenden Symmetrieebene eines Ringmagneten gemessen werden. Der Betrag der Nord/Süd-Asymmetrievektoren kann nach der angegebenen Formel berechnet werden. Dabei kommt es lediglich darauf an, dass für alle in einem Lager verwendete Ringmagnete dieselbe Maß- und Berechnungsmethode verwendet wird, da innerhalb eines Lagers eine Kompensation angestrebt wird. Da bei einheitlicher Herstellungsmethode die Eigenschaften der Ringmagnete sehr ähnlich sind, kann in erster Näherung auch von einer Einheitslänge (in Figur 6 Längenmass= 5) der Nord/Süd-Asymmetrievektoren ausgegangen und lediglich deren Orientierung für eine Kompensation berücksichtigt werden.

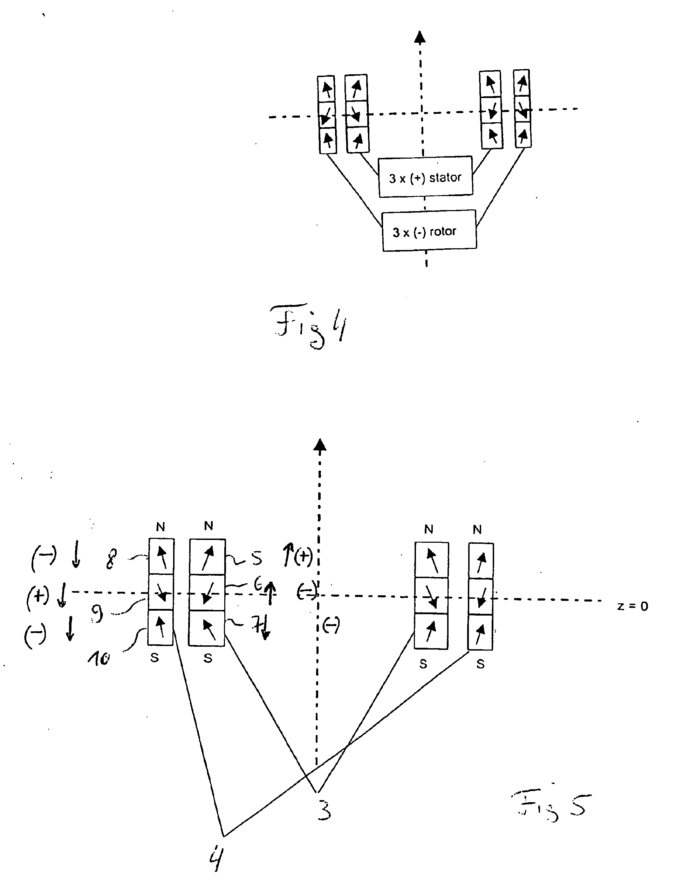

In der Figur 5 ist ein radiales Magnetlager dargestellt mit einem Statorteil 3 und einem Rotorteil 4. Die Nord- und Südpole sind eingezeichnet. Die einzelnen Pfeile in den Querschnittsflächen der Ringsegmente bezeichnen die jeweiligen Nordpole der einzelnen Ringmagnete. Die Polarität der Nord/Süd-Asymmetrie für die einzelnen Ringe ist: Ring 5: (+), Ring 6: (-), Ring 7: (-), Ring 8: (-), Ring 9: (+), Ring 10: (-). Die Nord/Süd-Asymmetrievektoren sind jeweils neben den Ringmagneten durch Pfeile bezüglich ihrer Orientierung gekennzeichnet. Die Stärke der Nord/Süd-Asymmetrie eines einzelnen Ringmagneten soll zunächst außer acht gelassen werden, da sie für die meisten Ringmagnete in einem mittleren Bereich von 10 % liegt. Der Betrag der Nord/Süd-Asymmetrie wird für die Zwecke dieser Erfindung in nächster Näherung als gleich für verschiedene Ringmagnete angenommen.

Das in Figur 5 dargestellte Lager ist mit seiner Anordnung von Ringmagneten 5 bis 10 in bezug auf die Nord/Süd-Asymmetrie nicht vollständig kompensiert. Es sind vier Ringe mit negativer Nord/Süd-Asymmetrie und nur zwei Ringe mit positiver Nord/Süd-Asymmetrie vorhanden. Gemäss der Figur sind auch die Orientierungen der Nord/Süd- Asymmetrien nicht optimal kompensiert. Es sind bei den Ringmagneten 5 und 6 die Nord/Süd- Asymmetrievektoren nach oben, bei den übrigen vier Ringmagneten nach unten gerichtet. Insbesondere sieht man, dass die radialen Magnetisierungskomponenten der benachbarten Ringe 7 und 10 in die gleiche Richtung weisen, wodurch die radiale Steifigkeit des Lagers beeinträchtigt wird. Besser könnte eine Ausgestaltung mit jeweils drei Ringen mit positiver Nord/Süd-Asymmetrie und drei Ringen mit negativer Nord/Süd-Asymmetrie sein, gleich ob diese im Statorteil oder im Rotorteil angeordnet sind, wobei drei der jeweiligen Asymmetrievektoren nach oben und drei nach unten gerichtet sind.

Eine verbesserte Ausführung zeigt Figur 3: Dort sind im Stator drei Ringmagnete mit negativer Nord/Süd-Asymmetrie, im Rotor drei Ringmagneten mit positiver Nord/Süd-Asymmetrie angeordnet. Die Orientierung der Asymmetrievektoren 12a, 12b von jeweils einander zugeordneten Ringmagneten des Statorteils und des Rotorteils sind jeweils entgegengesetzt. Dies ist ebenso bei der Konfiguration gemäß Figur 4.

Auf diese Weise ist es möglich, Statoren und Rotoren jeweils für sich vorzufertigen und einen Ausgleich bezüglich der Nord/Süd-Asymmetrie erst beim Zusammenbau der Lager zu schaffen.

## Patentansprüche

1. Verfahren zur Bearbeitung eines Ringmagneten mit Axialmagnetisierung bei dem der Nord/Süd-Asymmetrievektor (11, 12a, 12b) des Ringmagneten (1, 5, 6, 7, 8, 9, 10) gemessen und darauf wenigstens der Richtungssinn des Nord/Süd-Asymmetrievektors (11,12a,12b) auf dem Ringmagneten (1, 5, 6, 7, 8, 9, 10) markiert wird.

2. Verfahren nach Anspruch 1, bei dem auch der Betrag des Nord/Süd-Asymmetrievektors (11,12a,12b) auf dem Ringmagneten (1,5,6,7,8,9,10) markiert wird.

3. Verfahren nach Anspruch 1 oder 2, bei dem der Nord/Süd-Asymmetrievektor (11,12a,12b) durch Messung der Magnetfeldstärke auf der Nordseite und auf der Südseite der zu der Zylinderachse des Ringmagneten (1,5,6,7,8,9,10) senkrecht stehenden Symmetrieebene und Vergleich der Messwerte sowie deren in Beziehung setzen zueinander durch Summen- oder Differenzbildung bestimmt wird.

4. Verfahren zur Herstellung eines radialen Magnetlagers mit folgenden Schritten:
Vorgeben eines Schwellwertes;
Herstellen eines radialen Magnetlagers mit einem Statorteil (3) und einem Rotorteil (4) mit jeweils wenigstens einem permanentmagnetischen Ringmagneten (1,5,6,7,8,9,10), die jeweils im wesentlichen in Richtung ihrer Zylindersymmetrieachse magnetisiert sind, wobei alle Ringmagnete (1,5,6,7,8,9,10) derart koaxial zueinander angeordnet werden, dass die Summe ihrer Nord/Süd-Asymmetrievektoren (11,12a,12b) kleiner ist als der vorgegebene Schwellwert.

5. Verfahren zur Herstellung eines radialen Magnetlagers mit einem gemäß einem der Ansprüche 1, 2 oder 3 bearbeiteten Ringmagneten, bei dem Ringmagnete (1,5,6,7,8,9,10) derart koaxial zueinander angeordnet werden, dass die Summe ihrer Nord/Süd-Asymmetrievektoren (11,12a,12b) minimiert wird.

6. Radiales Magnetlager mit einem Statorteil (3) und einem Rotorteil (4) mit jeweils wenigstens einem permanentmagnetischen Ringmagneten (1,5,6,7,8,9,10), die koaxial zueinander angeordnet und jeweils im wesentlichen in Richtung seiner Zylindersymmetrieachse magnetisiert sind, wobei
der Statorteil (3) zwei oder mehr Ringmagnete (5,6,7) aufweist, deren Nord/Süd-Asymmetrievektoren untereinander denselben ersten Richtungssinn aufweisen;
der Rotorteil (4) aus ebenso vielen Ringmagneten (8, 9, 10) wie der Statorteil (3) besteht, deren Nord/Süd-Asymmetrievektoren untereinander denselben, jeweils dem ersten Richtungssinn entgegengesetzte zweite Richtungen aufweisen.

7. Radiales Magnetlager nach Anspruch 6, bei dem der Statorteil zwei oder mehr Ringmagnete (1,5,6,7,8,9,10) aufweist, deren Nord/Süd-Asymmetrievektoren alle jeweils zum Nordpol des jeweiligen Ringmagneten (1,5,6,7,8,9,10) zeigen, und bei dem der Rotorteil ebensoviele Ringmagnete (1,5,6,7,8,9,10) aufweist, deren Nord/Süd-Asymmetrievektoren (11,12a,12b) alle zum Südpol des jeweiligen Ringmagneten (1,5,6,7,8,9,10) zeigen, oder umgekehrt.

## Claims

1. Method for machining a ring magnet with axial magnetization in which the north/south asymmetry vector (11, 12a, 12b) of the ring magnet (1, 5, 6, 7, 8, 9, 10) is measured and subsequently at least the sense of direction of the north/south asymmetry vector (11, 12a, 12b) is marked on the ring magnet (1, 5, 6, 7, 8, 9, 10).

2. Method according to Claim 1, in which the magnitude of the north/south asymmetry vector (11, 12a, 12b) is also marked on the ring magnet (1, 5, 6, 7, 8, 9, 10).

3. Method according to Claim 1 or 2, in which the north/south asymmetry vector (11, 12a, 12b) is determined by measuring the magnetic field strength on the north side and on the south side of the symmetry plane that stands perpendicular with respect to the cylinder axis of the ring magnet (1, 5, 6, 7, 8, 9, 10), and by comparing the measurement values and determining their mutual relation by sum or difference calculation.

4. Method for producing a radial magnetic bearing with the following steps:
specifying a threshold value;
producing a radial magnetic bearing with a stator part (3) and a rotor part (4) each with at least one permanent magnetic ring magnet (1, 5, 6, 7, 8, 9, 10), which are each magnetized substantially in the direction of their cylinder symmetry axis, wherein all the ring magnets (1, 5, 6, 7, 8, 9, 10) are arranged coaxially with respect to one another so that the sum of their north/south asymmetry vectors (11, 12a, 12b) is smaller than the specified threshold value.

5. Method for producing a radial magnetic bearing with a ring magnet machined according to one of Claims 1, 2 or 3, in which the ring magnets (1, 5, 6, 7, 8, 9, 10) are arranged coaxially relative to one another in such a manner that the sum of their north/south asymmetry vectors (11, 12a, 12b) is minimized.

6. Radial magnetic bearing with a stator part (3) and a rotor part (4) each with at least one permanent magnetic ring magnet (1, 5, 6, 7, 8, 9, 10), which are arranged coaxially relative to one another and which are each magnetized substantially in the direction of its cylinder symmetry axis, wherein
the stator part (3) comprises two or more ring magnets (5, 6, 7), the north/south asymmetry vectors of which among themselves have the same first sense of direction;
the rotor part (4) consists of as many ring magnets (8, 9, 10) as the stator part (3), the north/south asymmetry vectors of which among themselves have the same directions, in each case opposite the first sense of direction.

7. Radial magnetic bearing according to Claim 6, in which the stator part comprises two or more ring magnets (1, 5, 6, 7, 8, 9, 10), the north/south asymmetry vectors of which all point to the north pole of the respective ring magnet (1, 5, 6, 7, 8, 9, 10), and in which the rotor part has just as many ring magnets (1, 5, 6, 7, 8, 9, 10), the north/south asymmetry vectors (11, 12a, 12b) of which all point to the south pole of the respective ring magnet (1, 5, 6, 7, 8, 9, 10), or vice versa.

## Revendications

1. Procédé d'usinage d'un aimant annulaire doté d'une magnétisation axiale dans laquelle le vecteur d'asymétrie nord/sud (11, 12a, 12b) de l'aimant annulaire (1, 5, 6, 7, 8, 9, 10) est mesuré et par la suite, au moins le sens de direction du vecteur d'asymétrie nord/sud (11, 12a, 12b) est marqué sur l'aimant annulaire (1, 5, 6, 7, 8, 9, 10).

2. Procédé selon la revendication 1, dans lequel l'amplitude du vecteur d'asymétrie nord/sud (11, 12a, 12b) est également marqué sur l'aimant annulaire (1, 5, 6, 7, 8, 9, 10).

3. Procédé selon la revendication 1 ou 2, dans lequel le vecteur d'asymétrie nord/sud (11, 12a, 12b) est déterminé par mesure de l'intensité du champ magnétique sur le côté nord et sur le côté sud du plan de symétrie qui se tient perpendiculairement par rapport à l'axe du cylindre de l'aimant annulaire (1, 5, 6, 7, 8, 9, 10), et par comparaison des valeurs de mesure et par détermination de leur relation mutuelle par calcul de somme ou de différence.

4. Procédé de production d'un palier magnétique radial selon les étapes suivantes :
spécification d'une valeur seuil ;
production d'un palier magnétique radial avec une partie stator (3) et une partie rotor (4), dont chacun porte au moins un aimant annulaire magnétique permanent (1, 5, 6, 7, 8, 9, 10), qui sont chacun magnétisés sensiblement dans la direction de leur axe de symétrie de cylindre, l'ensemble des aimants annulaires (1, 5, 6, 7, 8, 9, 10) étant disposé coaxialement l'un par rapport à l'autre de sorte que la somme de leurs vecteurs d'asymétrie (11, 12a, 12b) est plus petite que la valeur seuil spécifiée.

5. Procédé de production d'un palier magnétique radial doté d'un aimant annulaire usiné selon l'une des revendications 1, 2 ou 3, dans lequel les aimants annulaires (1, 5, 6, 7, 8, 9, 10) sont disposés coaxialement les uns par rapport aux autres de sorte que la somme de leurs vecteurs d'asymétrie nord/sud (11, 12a, 12b) est limitée.

6. Palier magnétique radial doté d'une partie stator (3) et d'une partie rotor (4), chacune étant dotée d'au moins un aimant annulaire magnétique permanent (1, 5, 6, 7, 8, 9, 10), qui sont disposés coaxialement les uns par rapport aux autres et qui sont chacun magnétisé sensiblement dans la direction de son axe de symétrie de cylindre, dans lequel
la partie stator (3) comprend au moins deux aimants annulaires (5, 6, 7), dont les vecteurs d'asymétrie nord/sud ont entre eux le même premier sens de direction ;
la partie rotor (4) est constituée d'autant d'aimants annulaires (8, 9, 10) que la partie stator (3), dont les vecteurs d'asymétrie nord/sud ont entre eux les mêmes directions, dans chaque cas opposées au premier sens de direction.

7. Palier magnétique radial selon la revendication 6, dans lequel la partie stator comprend au moins deux aimants annulaires (1, 5, 6, 7, 8, 9, 10), dont les vecteurs d'asymétrie nord/sud sont tous pointés vers le pôle nord de l'aimant annulaire respectif (1, 5, 6, 7, 8, 9, 10), et dans lequel la partie rotor a juste autant d'aimants annulaires (1, 5, 6, 7, 8, 9, 10), dont les vecteurs d'asymétrie nord/sud (11, 12a, 12b) pointent tous vers le pôle sud de l'aimant annulaire respectif (1, 5, 6, 7, 8, 9, 10), ou vice versa.
